## Europäisches Patentamt
## European Patent Office
## Office européen des brevets

(11) Veröffentlichungsnummer: **0 212 269**
**B1**

(12) **EUROPÄISCHE PATENTSCHRIFT**

(45) Veröffentlichungstag der Patentschrift: **19.09.90**

(51) Int. Cl.⁵: **A 01 F 12/40**

(21) Anmeldenummer: **86109828.3**

(22) Anmeldetag: **17.07.86**

(60) Teilanmeldung 89114109.5 eingereicht am 17/07/86.

(54) Mähdrescher mit Anbauhäcksler.

(30) Priorität: **08.08.85 DE 3528538**
**22.01.86 DE 3601777**
**20.06.86 DE 3620747**

(43) Veröffentlichungstag der Anmeldung:
**04.03.87 Patentblatt 87/10**

(45) Bekanntmachung des Hinweises auf die Patenterteilung:
**19.09.90 Patentblatt 90/38**

(84) Benannte Vertragsstaaten:
**AT BE CH FR GB IT LI NL SE**

(56) Entgegenhaltungen:
**DE-A-2 444 550      FR-A-2 133 576**
**DE-A-2 815 936      FR-A-2 427 040**
**DE-B-2 810 176      GB-A-1 082 832**
**DE-C- 194 433        GB-A-2 028 086**
**DE-C- 413 515        US-A-3 165 133**
**DE-U-8 202 574      US-A-3 669 123**
**DE-U-8 522 904      US-A-4 056 107**
**FR-A-1 338 698**

(73) Patentinhaber: **BISO Bitter GmbH. & Co.KG.**
**Ladestrasse 3 - 9**
**D-4986 Rödinghausen-Bruchmühlen (DE)**

(72) Erfinder: **Scharf, Alois**
**Kohne-Weg 7**
**D-4520 Melle 8-St.Annen (DE)**

(74) Vertreter: **Gossel, Hans K., Dipl.-Ing. et al**
**Rechtsanwälte E. Lorenz - B. Seidler M. Seidler -**
**Dipl.-Ing. H.K. Gossel Dr. I. Philipps - Dr. P.B.**
**Schäuble Dr. S. Jackermeier - Dipl.-Ing. A.**
**Zinnecker**
**Widenmayerstrasse 23 D-8000 München 22 (DE)**

(56) References cited:
**DEUTSCHE AGRARTECHNIK, Band 17, Nr. 6, Juni 1967, Seite 263, VEB Verlag Technik, Berlin, DE: "Eine Anbau-Häckselvorrichtung zum Mähdrescher"**

**LANDBOUWMECHANISATIE, Band 30, Nr. 12, Dezember 1979, Stichting Landbouw-Mechanisatie-Pers, Wageningen, NL: "Canadese proeven met verbeterde strohakselaars"**

**Beschreibung**

Die Erfindung betrifft einen Mähdrescher mit einem Anbauhäcksler nach dem Oberbegriff des Anspruchs 1.

Mähdrescher mit Anbauhäckslern sind in unterschiedlichen Ausführungsformen und beispielsweise auch aus der DE-U-80 14 119 bekannt. Die Anbauhäcksler streuen das gehäckselte Stroh je nach der Ausgestaltung der mit diesen verbundenen Strohverteilungseinrichtungen breit oder in einem Schwad aus, so daß es untergepflügt oder gegebenenfalls auch aufgenommen werden kann. Darüberhinaus gibt es Anwendungsfälle, in denen es erwünscht ist, das von dem Mähdrescher ausgeworfene Stroh nicht zu häckseln, sondern als Langstroh auf das Feld abzuwerfen, so daß es anschließend von entsprechenden Aufnehmegeräten gesammelt und gebündelt oder gerollt abgesetzt werden kann, um es anschließend beispielsweise als Streustroh in Ställen verwenden zu können.

Es ist bekannt, den Anbauhäcksler auf Führungen des Mähdreschers nach vorn zu verfahren und dort zu fixieren, so daß die Auswurföffnung des Mähdreschers für das Stroh freigegeben ist und das Stroh als Langstroh auf das Feld abgeworfen werden kann. Diese entsprechende Ausgestaltung eines Mähdreschers bedingt jedoch einen erhöhten konstruktiven Aufwand, um den Häcksler verschieben zu können, und das Verschieben des Anbauhäckslers in seine inaktive Stellung erfordert mit einem längeren Arbeitsaufwand verbundene Manipulationen. Zusätzlich muß auch die Verteileinrichtung des Anbauhäckslers mit dem zugehörigen Streublech entfernt und in eine das Auswerfen des Langstrohs nicht behindernde Stellung gebracht werden.

Ein Mähdrescher mit einem Anbauhäcksler nach dem Oberbegriff des Anspruchs 1 ist aus der DE-A-24 44 550 bekannt. Hierbei kann ein Strohleitblech sowohl in eine nach vorne geschwenkte Lage als auch in eine nach hinten geschwenkte Lage gebracht werden. In der nach vorne geschwenkten Lage wird das Stroh zur Langablage an dem Anbauhäcksler vorbeigeleitet. In der nach hinten geschwenkten Lage wird das Stroh dem Anbauhäcksler zugeführt. In seiner nach hinten geschwenkten Stellung ersetzt das Strohleitblech die Mähdrescherrückwand, während bei der vorderen Stellung des Strohleitblechs überhaupt keine Mähdrescherrückwand vorhanden ist.

Aus der GB-A-2 028 086 ist ein Mähdrescher mit einem Anbauhäcksler bekannt, bei dem ein um eine Achse schwenkbares Strohleitblech vorhanden ist. Auch hier kann das Strohleitblech in eine vordere, den Anbauhäcksler abdeckende Stellung für Langablage gebracht werden sowie in eine hintere Stellung, in der das Stroh dem Anbauhäcksler zugeführt wird. Damit das Strohleitblech in diese hintere Stellung gebracht werden kann, muß die Mähdrescherrückwand nach hinten ausstellbar ausgestaltet sein.

Üblicherweise ist jedoch das beim Häckslerbetrieb unter die Schüttler geschwenkte und dort fixierte Strohleitblech nicht lang genug, um nach dem Umschwenken in Anlage an das Heckblech der hinteren Abdeckhaube gebracht oder in dessen Bereich fixiert zu werden, so daß zwischen dem hinteren Heckblech und der Oberkante des Strohleitblechs kein Spalt verbleibt, in dem sich abgeworfenes Stroh verfangen oder aufbauen könnte.

Aufgabe der Erfindung ist es daher, einen Mähdrescher der eingangs angegebenen Art zu schaffen, der sich auf einfache Weise, schnell und bei einfacher Handhabung von Häckslerbetrieb auf einen den Häcksler umgehenden Betrieb umstellen läßt, bei dem das von dem Mähdrescher ausgeworfene Stroh als Langstroh auf das Feld abgeworfen wird, und bei dem der Spalt zwischen dem Strohleitblech und dem Heckblech der Abdeckhaube des Mähdreschers geschlossen ist.

Erfindungsgemäß wird diese Aufgabe bei einem Mähdrescher der eingangs angegebenen Art durch die im kennzeichnenden Teil des Anspruchs 1 angegebenen Merkmale gelöst. Wird das Strohleitblech nach hinten verschwenkt und in dieser die Einzugsöffnung des Anbauhäckslers abdeckenden Stellung fixiert, rutscht das von den Schüttlern abgeworfene Langstroh von dem Strohleitblech ab und fällt durch die vor dem Anbauhäcksler befindliche Öffnung auf den Boden. Das Umschwenken des Strohleitblechs kann in einfacher Weise durch einen außerhalb der Abdeckhaube des Mähdreschers befindlichen Handhebel erfolgen, der fest mit der Schwenkwelle des Strohleitblechs verbunden ist.

Das oberer Strohleitblech verlängert gleichsam das untere über die Einzugsöffnung des Anbauhäckslers geschwenkte Strohleitblech, so daß der Spalt zwischen diesem und dem Heckblech der Abdeckhaube des Mähdreschers geschlossen ist. Beide Abdeckbleche können unabhängig voneinander durch mit deren Schwenkwellen verbundene Hebel in ihre miteinander fluchtenden Stellungen sowie in ihre Ausgangsstellungen verschwenkt werden.

Nach einer zweckmäßigen Ausgestaltung ist jedoch vorgesehen, daß die Schwenkwellen des unteren und des oberen Strohleitblechs jeweils einen fest aufgesetzten Hebel tragen, deren freien Enden derart gelenkig mit einer Koppelstange verbunden sind, daß die Schwenkbewegungen der Strohleitbleche aus der unter dem Schüttler befindlichen bzw. an das Heckblech angeklappten Stellung in ihre miteinander fluchtende Stellung und umgekehrt gekoppelt sind. Nach dieser Ausgestaltung läßt sich das Ein- und Ausschwenken der Strohleitbleche mit einem einzigen an einer Schwenkwelle befestigten Handhebel bewirken. Die Umstellung von Häckslerbetrieb auf Langstrohablage läßt sich damit auf einfache Weise nur mit einem Handgriff bewerkstelligen.

Zur Fixierung der beiden Schwenklagen des unteren Strohleitblechs kann eine an das Gehäuse oder die Abdeckhaube angelenkte Gasfeder vorgesehen sein, deren anderes Ende an einen auf dessen Schwenkwelle befestigten Hebel in der Weise angelenkt ist, daß diese bei der Verschwenkung zwischen den beiden Schwenklagen ihre Totpunktstellung durchwandert. Zur Sicherung der ausgeschwenkten Stellung des oberen Strohleitblechs kann mit diesem und dem Gehäuse oder dem Heckblech eine Gasfeder gelenkig verbunden sein.

Um die beiden zur Langstrohablage in ihre fluchtende Stellung über der Einzugsöffnung des Anbauhäckslers geschwenkten Strohleitbleche aneinander zu arretieren, kann eine der einander zugewandten frei schwenkbaren Seiten der Strohleitbleche unter Bildung einer Stufe mit einem einen das Strohleitblech verlängernden Steg aufweisenden Rand versehen sein, der einen Anschlag für den Rand des anderen Strohleitblechs bildet. Zusätzlich können die jeweiligen Endstellungen der Strohleitbleche sichernde Anschläge an den Seitenwänden und/oder dem Heckblech der hinteren Abdeckhaube vorgesehen sein, wobei die Anschläge zur Verriegelung der Strohleitbleche mit durch Elektromagnete ausfahrbaren und einziehbaren Verriegelungsbolzen versehen sind, die in entsprechende Ausnehmungen der Strohleitbleche greifen.

Wenn das Strohleitblech wegen mangelnder Platzverhältnisse nicht steil genug in dem Mähdrescher eingebaut werden kann oder wenn der Mähdrescher in unebenem Gelände arbeitet, kann sich das Stroh auf dem Strohleitblech ablagern. Diese Ablagerung kann in extremen Fällen so stark sein, daß sich in dem Mähdrescher bzw. in der Haube Stroh staut und Schäden an den Schüttlern verursacht.

Um in zuverlässiger und einfacher Weise einen kontinuierlichen Strohfluß zu gewährleisten, ist nach einer erfinderischen Weiterbildung vorgesehen, daß das Strohleitblech in eine Schwingbewegung versetzt werden kann. Diese Schwingbewegung kann in vorteilhafter Weise durch rotierende Exzenter erzeugt werden, die an dem Strohleitblech angeordnet sind. Diese erfindungsgemäße Ausgestaltung gewährleistet, daß sich das Stroh nicht auf dem Strohleitblech ablagern, sich nicht in dem Mähdrescher bzw. in dessen Haube stauen und Schäden an den Schüttlern verursachen kann.

Weitere vorteilhafte Ausgestaltungen der Erfindung sind Gegenstand weiterer Unteransprüche.

Ausführungsbeispiele der Erfindung werden nachstehend anhand der Zeichnung näher erläutert. In dieser zeigt

Fig. 1 eine Seitenansicht auf den hinteren Endbereich des Mähdreschers mit dem Anbauhäcksler,

Fig. 2 eine der Fig. 1 entsprechende Seitenansicht der gegenüberliegenden Seite des Mähdreschers mit Anbauhäcksler,

Fig. 3 eine Rückansicht des Mähdreschers mit Anbauhäcksler nach den Fig. 1 und 2,

Fig. 4 einen Schnitt durch den Mähdrescher nach der Linie A—B in Fig. 3,

Fig. 5 eine Seitenansicht auf den hinteren Endbereich einer zweiten Ausführungsform eines Mähdreschers mit dem Anbauhäcksler,

Fig. 6 in einer Seitenansicht eine schematische Darstellung der Stellungen des Strohleitblechs,

Fig. 7 bis 10 Seitenansichten der Schwenkwelle und des mit dieser verbundenen Kurbeltriebs,

Fig. 11 in einer Seitenansicht eine schematische Darstellung der Schwenkwelle, des Strohleitblechs in verschiedenen Stellungen und der mit der Schwenkwelle verbundenen Unwucht,

Fig. 12 die Ausführungsform gemäß Fig. 11 in einer Frontansicht,

Fig. 13 in einer Seitenansicht eine schematische Darstellung des Strohleitblechs in verschiedenen Stellungen, wobei das Strohleitblech aus zwei gelenkig miteinander verbundenen Teilen besteht,

Fig. 14 eine Seitenansicht des Strohleitblechs in verschiedenen Stellungen, wobei das Strohleitblech als geschlossener Hohlkörper ausgebildet ist und Luftaustrittsschlitze aufweist,

Fig. 15 in einer Seitenansicht das Strohleitblech in verschiedenen Stellungen, wobei das Strohleitblech ein umlaufendes Band aufweist, und

Fig. 16 die Ausführungsform gemäß Fig. 15 in einer Frontansicht und.

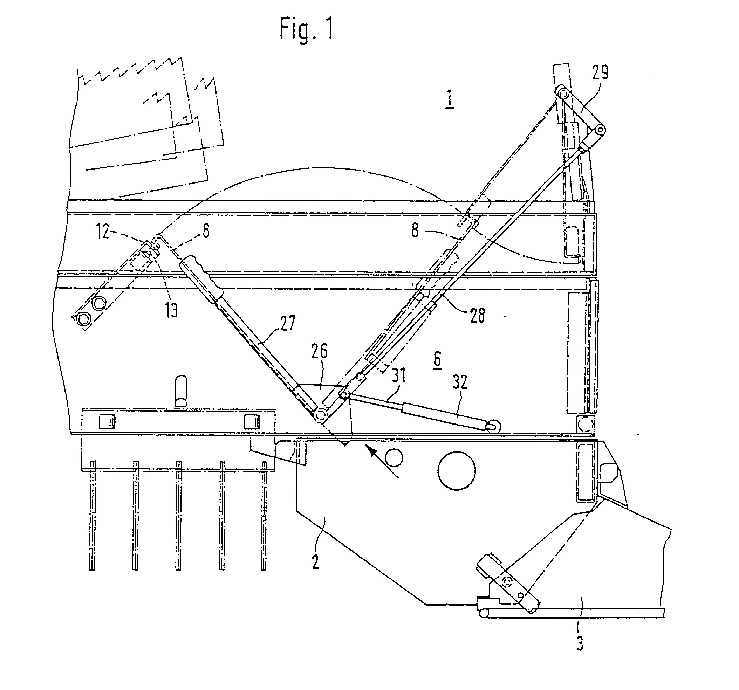

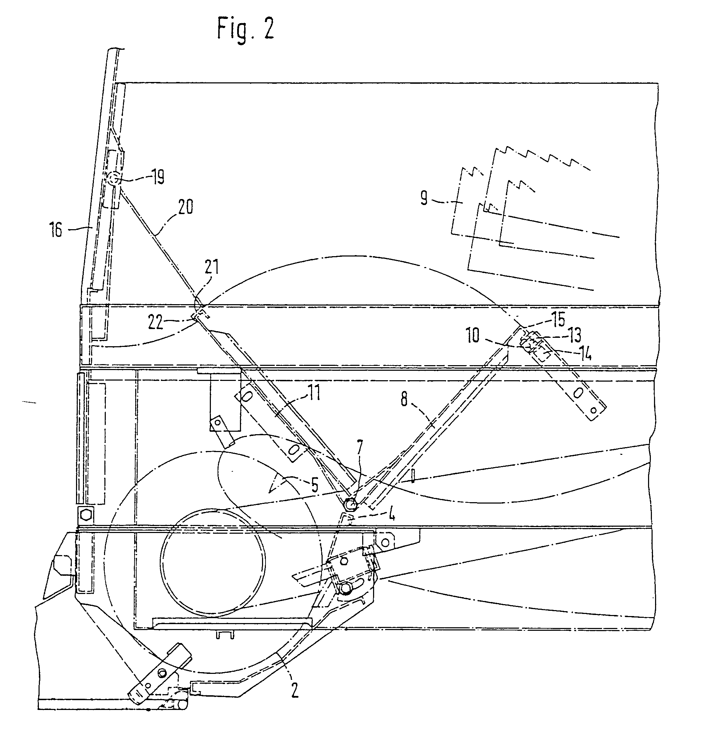

Unterhalb der hinteren Abdeckhaube 1 des Mähdreschers ist an einem umlaufenden Rahmen oder umlaufenden, aus Blechen gebildeten Trägern in üblicher Weise der Anbauhäcksler 2 angebaut, dessen Auswurföffnung mit einer haubenförmigen, Strohverteilungsbleche aufweisenden Strohverteileinrichtung 3 versehen ist. Oberhalb und unmittelbar angrenzend an die innere Kante 4 der Einzugsöffnung 5 des Anbauhäckslers 2 ist in seitlichen Wandungen 6 des Mähdreschers die Schwenkwelle 7 drehbar gelagert, die fest mit dem unteren Strohleitblech 8 verbunden ist. Das Strohleitblech 8 ist in der aus den Fig. 1 und 2 ersichtlichen Weise zwischen seiner nach innen geschwenkten Stellung unter den Schüttlern 9 und seiner nach außen geschwenkten Stellung, in der es die Einzugsöffnung 5 des Anbauhäckslers 2 schräg abdeckt, verschwenkbar. Beide Endstellungen sind durch Anschläge 10, 11, 12, die an den Seitenwandungen des Mähdreschers vorgesehen sind, gesichert. Zur Sicherung der Endstellungen sind die Anschläge mit axial verschieblichen Bolzen 13 versehen, die durch Elektromagnete 14 beweglich sind und zur Verriegelung des unteren Strohleitblechs 8 in entsprechende Öffnungen des äußeren Schenkels des U-förmig nach außen gebogenen Randes 15 eingreifen.

Oberhalb des Anbauhäckslers 2 ist in mit dem hinteren Heckblech 16 oder den Seitenwandungen 17 verbundenen Lagern die Schwenkwelle 19 gelagert, auf der das obere Strohleitblech 20 befestigt ist. Dieses obere Strohleitblech 20 ist in der aus Fig. 2 ersichtlichen Weise zwischen sein an das Heckblech 16 angeschwenkten und seiner mit dem unteren Strohleitblech 8 fluchtenden Stellung verschwenkbar. Die frei schwenkbare Seite des oberen Strohleitblechs 20 ist mit einem Z-förmig gekröpften Rand 21 versehen, wobei dessen zu dem Strohleitblech paralleler, eine Stufe bildender Schenkel 22 einen Anschlag für den oberen Rand des unteren Strohleitblechs 8 in der fluchtenden Stellung beider Strohleitbleche bildet.

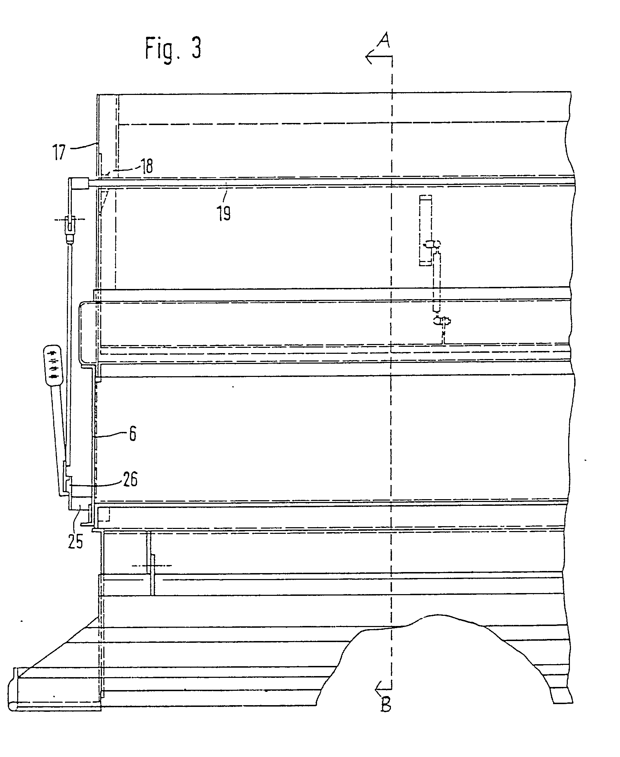

Auf den durch das Seitenblech 6 des Mähdreschers nach außen geführten Zapfen 25 der Schwenkwelle 7 des unteren Strohleitblechs 8 ist in der aus den Fig. 1 und 3 ersichtlichen Weise ein dreieckiges Blech 26 aufgeschweißt, das fest mit dem von Hand betätigbaren Hebel 27 verbunden ist. Das Blech 13 ist weiterhin gelenkig mit der Koppelstange 28 verbunden, deren anderes Ende an den Hebel 29 angelenkt ist, der fest mit dem nach außen geführten Zapfen der Welle 19 verbunden ist. Das Blech 26 und der Hebel 29 sind dabei derart mit den Schwenkwellen verbunden und die Anlenkpunkte der Koppelstange 28 sind derart gewählt, daß durch Betätigung des Handhebels 27 das untere und obere Strohleitblech 8, 20 zwischen ihren Stellungen bei Häckslerbetrieb und Langablage des Strohs verschwenkt werden.

Zusätzlich ist das dreieckige Blech 26 mit der Kolbenstange 31 der Gasfeder 32 gelenkig verbunden, deren Zylinder an der Seitenwand 6 angelenkt ist. Dabei ist die Anlenkung so gewählt, daß die Gasfeder bei ihrer Verschwenkung zwischen den beiden Schwenklagen des unteren Strohleitblechs 8 ihre Totpunktstellung durchwandert.

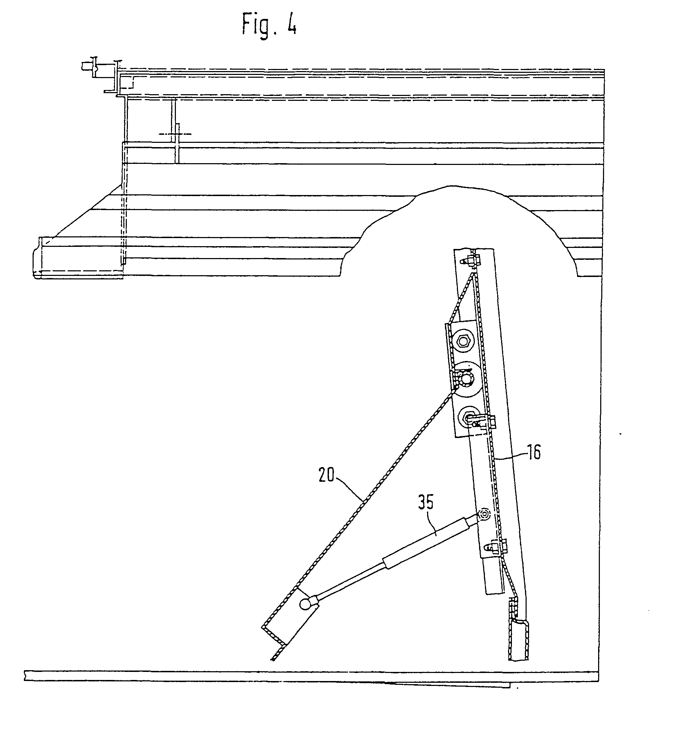

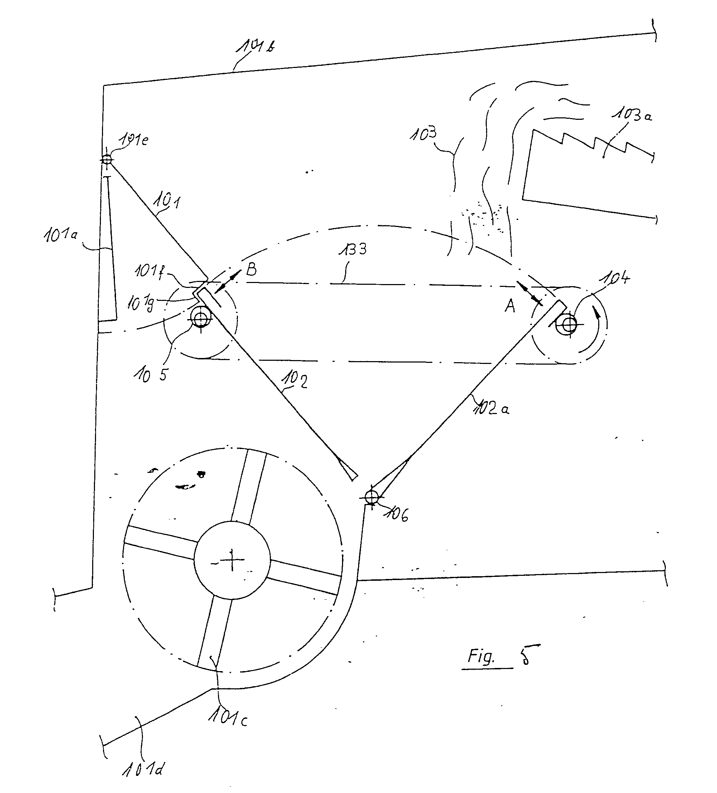

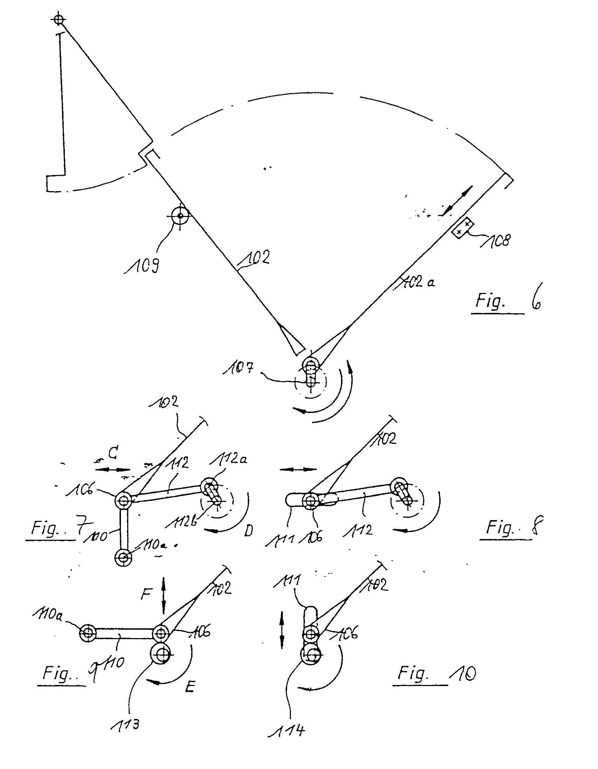

Auch das obere Strohleitblech 20 ist in der aus den Fig. 3 und 4 ersichtlichen Weise mit einer Gasfeder 35 versehen, die einerseits an dem Heckblech 16 und andererseits im oberen Endbereich an das obere Strohleitblech 20 angelenkt ist. Diese Gasfeder fixiert das obere Strohleitblech 20 in der ausgeschwenkten Stellung.

In Fig. 5 ist in einer Seitenansicht der hintere Teil einer zweiten Ausführungsform eines Mähdreschers gezeigt. Unterhalb der hinteren Abdeckhaube 101b des Mähdreschers ist an einem umlaufenden Rahmen oder umlaufenden, aus Blechen gebildeten Trägern in üblicher Weise der Anbauhäcksler 101c angebaut, dessen Auswurföffnung mit einer haubenförmigen, Strohverteilungsbleche aufweisenden Strohverteileinrichtung 101d versehen ist. Oberhalb des Anbauhäckslers 101c ist in seitlichen Wandungen des Mähdreschers die Schwenkwelle 106 drehbar gelagert, die fest mit dem unteren Strohleitblech 102, 102a verbunden ist. Das Strohleitblech ist in der aus Fig. 5 ersichtlichen Weise zwischen seiner nach innen geschwenkten Stellung 102a unter den Schüttlern 103a und seiner nach außen geschwenkten Stellung 102, in der es die Einzugsöffnung des Anbauhäckslers 101c schräg abdeckt, verschwenkbar. Beide Endstellungen sind durch Anschläge 104, 105, die an den Seitenwandungen des Mähdreschers vorgesehen sind, gesichert. Die Anschläge können aus Exzentern bestehen, um eine Einstellung zu ermöglichen.

Die Bezugsziffer 102a zeigt die Stellung des Strohleitblechs bei Häckselbetrieb, die Bezugsziffer 102 zeigt die Stellung des Strohleitblechs bei Langablage. Die Anschläge 104, 105 bestehen aus rotierenden Exzentern, die das obere Ende des Strohleitblechs in eine durch die Doppelpfeile A, B angedeutete Hin- und Herbewegung versetzen. Dabei ist das Strohleitblech in beiden Stellungen 102, 102a um die Schwenkwelle 106 drehbar gelagert. Durch die Schwingbewegung in Richtung der Doppelpfeile A, B wird eine sichere Förderwirkung erreicht. Die Schwingbewegung ist sowohl bei Langablage als auch bei Häckselbetrieb möglich. Sie wird bei Langablage durch den rotierenden Exzenter 105 und bei Häckselbetrieb durch den rotierenden Exzenter 104 erzeugt. Die Exzenter 104, 105 werden in der Mähdrescher-Seitenwand gelagert und können als Einzelstücke oder als durchgehende Exzenterwelle gestaltet sein. Der Antrieb kann mechanisch, insbesondere über Keilriemen, elektrisch oder hydraulisch erfolgen. Bei mechanischem Antrieb können die Exzenter 104, 105 durch einen Riementrieb 133 gemeinsam angetrieben werden (Figur 5).

Oberhalb des Anbauhäckslers 101c ist in mit dem hinteren Heckblech oder den Seitenwandungen verbundenen Lagern die Schwenkwelle 101e gelagert, auf der das obere Strohleitblech 101, 101a befestigt ist. Dieses obere Strohleitblech ist zwischen seiner an das Heckblech angeschwenkten Stellung 101a und seiner mit dem unteren Strohleitblech 102, 102a fluchtenden Stellung 101 verschwenkbar. Die frei schwenkbare Seite des oberen Strohleitblechs 101 ist mit einem Z-förmig gekröpften Rand 101f versehen, wobei dessen zu dem Strohleitblech paralleler, eine Stufe bildender Schenkel 101g einen Anschlag für den oberen Rand des unteren Strohleitblechs 102, 102a in der fluchtenden Stellung 101, 102 beider Strohleitbleche bildet.

In Fig. 6 ist das Strohleitblech 102, 102a auf einer Exzenterwelle oder Kurbelwelle 107 gelagert und führt eine Auf-/Ab-Pendelbewegung aus. Als Anschlag kann ein Gleitstück 108 aus Kunststoff oder eine Rolle 109 dienen. Der Antrieb erfolgt in gleicher Weise wie bei der in Fig. 5 dargestellten Ausführungsform. Fig. 7 zeigt die Erzeugung einer Rüttelbewegung durch einen Kurbeltrieb. Das Strohleitblech 102 ist dabei mit der Schwenkwelle 106 verbunden. Die Schwenkwelle 106 ist über eine Gelenkstange 110 um den fest mit dem Mähdrescher verbundenen Punkt 110a verschwenkbar gelagert. Die Schwenkwelle 106 ist weiterhin mit einer Pleuelstange 112 fest verbunden, deren anderes Ende 112a exzentrisch um den Punkt 112b drehbar gelagert ist. Durch die Rotationsbewegung des Endes 112a der Pleuelstange 112 um den Punkt 112b gemäß der Pfeilrichtung D führt die Schwenkwelle 106 eine Hin- und Herbewegung gemäß dem Doppelpfeil C aus. Zur waagrechten Führung dient dabei die um den Punkt 110a schwenkbar gelagerte Gelenkstange 110. Bei kleinen Hubbewegungen kann die Gelenkstange 110 auch durch eine Blattfeder ersetzt werden.

Die in Fig. 8 dargestellte Ausführungsform entspricht im wesentlichen derjenigen nach Fig. 7. Dabei ist jedoch die Gelenkstange 110 ersetzt worden durch einen der waagrechten Führung der Schwenkwelle 106 dienenden Längsschlitz 111, der in der Mähdrescherseitenwand ausgebildet sein kann. Zur waagrechten Führung der Schwenkwelle 106 können neben der in Fig. 7 gezeigten Gelenkstange 110 und dem in Fig. 8 gezeigten Längsschlitz 111 auch andere Lagerelemente für Linearbewegungen verwendet werden. Bei günstigen Einbauverhältnissen kann die Schüttlerwelle, also die Antriebswelle des Schüttlers 103a, als Kurbelwelle 112a, 112b (Fig. 7) herangezogen werden oder es können die Pleuelstangen 112 am Schüttler 103a oder an den Siebkästen befestigt werden.

In der Ausführungsform gemäß Fig. 9 wird die Rüttelbewegung des Strohleitblechs 102 durch einen in Pfeilrichtung E rotierenden Exzenter 113 erzeugt, der die Schwenkwelle 106 in eine durch den Doppelpfeil F angedeutete Hin- und Herbewegung versetzt. Die Führung in senkrechter Richtung erfolgt dabei durch eine Gelenkstange 110, die an ihrem einen Ende am Punkt 110a mit dem Mähdrescher und an ihrem anderen Ende mit der Schwenkwelle jeweils schwenkbar verbunden ist.

Die Ausführungsform nach Fig. 10 entspricht im wesentlichen derjenigen nach Fig. 9. Die Gelenkstange 110 wurde jedoch durch den Längsschlitz 111 zur Erreichung einer Führung in senkrechter Richtung für die Schwenkwelle 106 ersetzt.

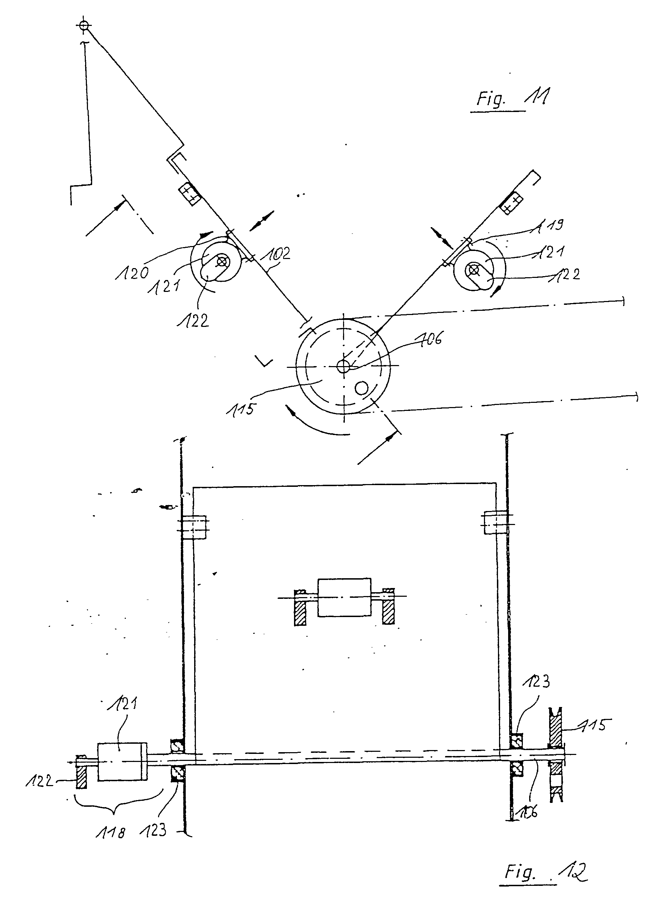

In der Ausführungsform gemäß den Fig. 11 und 12 führt das Strohleitblech 102 keine Hin- und Herbewegung aus, sondern wird in Vibration versetzt. Als Erreger dienen umlaufende Massen, die mit einer Unwucht versehen sind. Die als Erreger dienende, unwuchtbehaftete, umlaufende Masse kann z.B. eine Keilriemenscheibe 115 sein, die sich auf der Drehachse 106 des Strohleitblechs 102 befindet. Der Vibrator kann aber auch als separate Baueinheit 118 seitlich an die Drehachse 106 angeflanscht werden. Er kann auch direkt am Strohleitblech 102 befestigt werden, beispielsweise an den mit den Bezugsziffern 119, 120 bezeichneten Stellen. In diesem Fall besteht der Vibrator beispielsweise aus einem Hydro-, Pneumatik- oder Elektromotor mit Umlaufgewicht oder aus einem elektromagnetisch angeregten Feder-Masse-System. Um große Schwingungsausschläge des Strohleitblechs 102 zu ermöglichen und zu verhindern, daß Schwingungen auf den Mähdrescher übertragen werden, ist das Strohleitblech 102 in Weichgummiblocks 123 gelagert. Die soeben beschriebenen Vibratoren können vollkommen staub- und wasserdicht gekapselt werden.

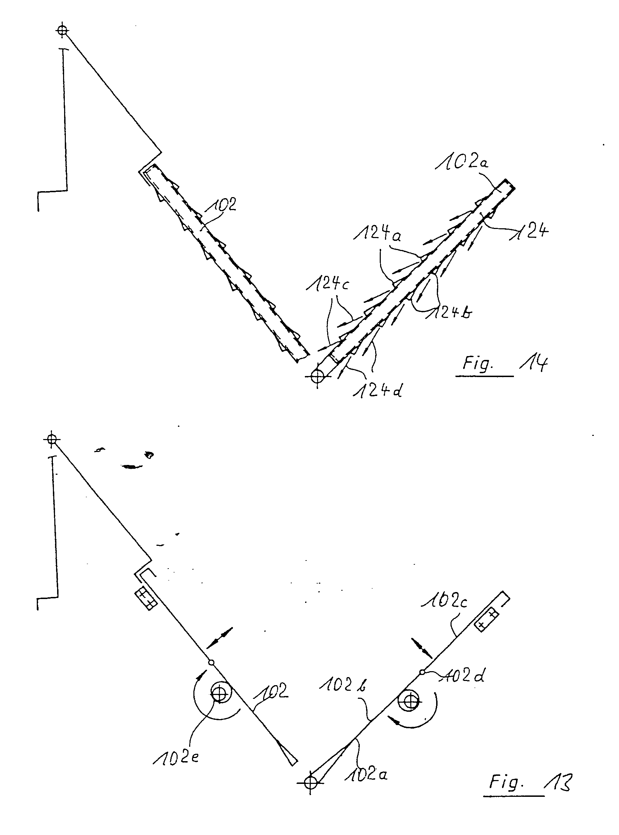

In der Ausführungsform gemäß Fig. 13 ist das untere Strohleitblech 102, 102a aus zwei Teilen 102b und 102c aufgebaut, die durch das Gelenk 102d gelenkig miteinander verbunden sind. Oberhalb oder unterhalb des Gelenkes erzeugt ein Exzenter 102e eine Schwingbewegung. Der Antrieb des Exzenters erfolgt wie in dem in Fig. 5 dargestellten Ausführungsbeispiel.

In Fig. 14 ist das Strohleitblech 102, 102a als geschlossener Hohlkörper 124 ausgebildet. An der Oberseite des geschlossenen Hohlkörpers 124 befinden sich auf beiden Seiten Luftaustrittsschlitze 124a, 124b, die quer zur Fahrtrichtung ausgebildet sind. Von einem externen Gebläse, das nicht in der Zeichnung dargestellt ist, wird Luft in den Hohlkörper 124 geblasen. Die Luft strömt in Richtung der Pfeile 124c und 124d aus den Luftaustrittsschlitzen 124a, 124b aus und fördert dadurch das Stroh in die gewünschte Richtung. Das als geschlossener Hohlkörper 124 ausgebildete Strohleitblech 102, 102a ist in Fig. 14 in zwei Stellungen gezeigt. Die mit dem Bezugszeichen 102 bezeichnete Stellung entspricht der Stellung bei Langablage, die durch das Bezugszeichen 102a bezeichnete Stellung entspricht der Stellung bei Häckslerbetrieb. Bei Häckslerbetrieb (Stellung 102a) werden an sich nur die Luftaustrittsschlitze 124a zur Förderung des Strohs benötigt, nicht jedoch die Luftaustrittsschlitze 124b. In der Stellung 102 des als geschlossener Hohlkörper 124 ausgebildeten Strohleitblechs (Stellung bei Langablage) werden umgekehrt an sich nur die Luftaustrittsschlitze 124b benötigt. Zur Verringerung der Gebläseleistung kann deshalb der Innenraum des Hohlkörpers 124 in Längsrichtung unterteilt werden. Es wird dann jeweils nur diejenige Seite des unterteilten Innenraums benutzt, d.h. mit Druckluft versorgt, die zur Förderung des Strohs Druckluft durch die Luftaustrittsschlitze 124a, 124b abgeben muß. Bei Langablage ist dies diejenige Seite des geschlossenen Hohlkörpers 124, auf der sich die Luftaustrittsschlitze 124b befinden, bei Häckselbetrieb ist dies die andere Seite, auf der sich die Luftaustrittsschlitze 124a befinden.

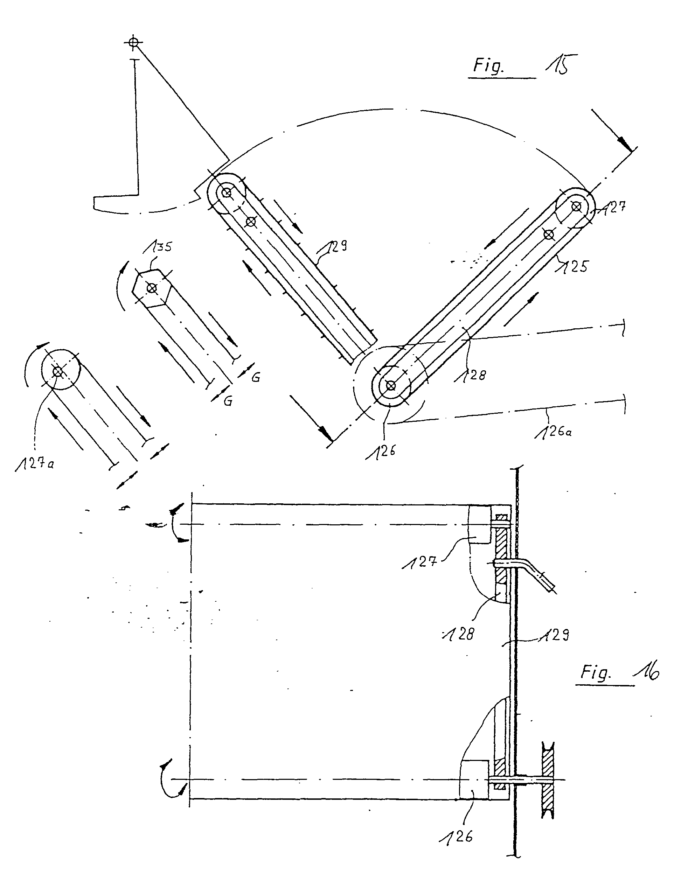

In der in den Fig. 15 und 16 dargestellten Ausführungsform dient als Strohleitfläche ein umlaufendes Band 125. Das umlaufende Band 125 wird von der Welle 126 angetrieben und durch die Welle 127 umgelenkt. Um von Häckselbetrieb auf Langablage wechseln zu können, wird die Umlenkwelle 127 in zwei klappbaren Haltern 128 gelagert, die an ihrer anderen Seite mit der Schwenkwelle 126 verbunden sind. Da das umlaufende Band bei Häckselbetrieb und bei Langablage in jeweils umgekehrter Richtung laufen muß, ist bei der Welle 126 ein Drehrichtungswechsel vorgesehen. Dieser kann z.B. durch Kreuzen des Riementriebs 126a erfolgen. Als umlaufendes Band IZ5 kann jedes für Gurtförderer bekannte Material verwendet werden. Die Förderfläche kann glatt oder profiliert (siehe Bezugszeichen 129) ausgebildet sein. Statt eines Gurtförderers kann auch ein Kratzförderer eingesetzt werden.

Die in der Fig. 15 dargestellten Rollen 126 und 127 können mit Erhebungen versehen sein, also "bucklig" ausgestaltet sein, um das umlaufende Band 125 in Schwingungen zu versetzen. Diese Schwingungen sind in Figur 15 durch die Doppelpfeile G dargestellt. Anstelle der Erhebungen kann auch ein Rollenpaar exzentrisch (127a) auf der Welle angeordnet sein, um die Schwingungen auf diese Weise zu erzeugen. Die Rollen 126 und 127 können zu demselben Zweck auch beide exzentrisch gelagert sein. Es ist auch möglich, nur eine der Rollen (Riemenscheiben) exzentrisch auf der Welle anzuordnen. Wie in Figur 15 ebenfalls dargestellt, können die Wellen 126 und 127 als Vieleck (Quadratrohr, Sechskantrohr) 135 gestaltet sein, wobei dem umlaufenden Band 125 durch den Polygoneffekt eine Schwingbewegung überlagert wird, die die Förderwirkung verbessert.

**Patentansprüche**

1. Mähdrescher mit einem Anbauhäcksler (2, 101c) einem unteren unter den das Stroh abwerfenden Schüttlern (9, 103a) geneigt angeordneten und um eine erste in seitlichen Blechen (6) des Mähdreschers gelagerte Welle (7, 106) oder befestigte Achse schwenkbar gelagerten Strohleitblech (8, 102, 102a) und einem oberen stohleitblech (20, 101, 101a), die das Stroh in die Einzugsöffnung (5) des Anbauhäckslers (2) führ ein können, wobei die Schüttler (9, 103a) von einer aus seitlichen Blechen (6) und einem hinteren Heckblech (16) aufgebauten Abdeckhaube (1, 101b) umgeben sind,
dadurch gekennzeichnet,
daß das untere Strohleitblech (8, 102, 102a) oberhalb der inneren Kante (4) der Einzugsöffnung (5) des Anbauhäckslers (2) gelagert und durch eine erste arretierende Einrichtung in seiner unter den Schüttlern (9, 103a) befindlichen oder seiner nach hinten geschwenkten, die Einzugsöffnung (5) schräg abdeckenden Stellung fixierbar ist und
daß um eine zweite oberhalb des Anbauhäckslers (2) im hinteren Endbereich der Abdeckhaube (1, 101b) gelagerte Welle (19, 101e) oder befestigte Achse das obere Strohleitblech (20, 101, 101a) schwenkbar gelagert ist, das durch eine zweite arretierende Einrichtung in seiner an das Heckblech (16) der Abdeckhaube (1, 101b) angeklappten oder in seiner mit dem unteren, über die Einzugsöffnung (5) verschwenkten Strohleitblech (8, 102, 102a) flüchtenden Stellung gehalten ist.

2. Mähdrescher nach Anspruch 1, dadurch gekennzeichnet, daß die Schwenkwellen (7, 106, 19, 101e) des unteren und des oberen Strohleitblechs (8, 102, 102a, 20, 101, 101a) jeweils einen fest afgesetzten Hebel (26, 29) tragen, deren freien Enden derart gelenkig mit einer Koppelstange (28) verbunden sind, daß die Schwenkbewegungen der Strohleitbleche (8, 102, 102a, 20, 101, 101a) aus der unter dem Schüttler (9, 103a) befindlichen bzw. an das Heckblech (16) angeklappten Stellung in ihre miteinander flüchtende Stellung und umgekehrt gekoppelt sind.

3. Mähdrescher nach Anspruch 1 oder 2, dadurch gekennzeichnet, daß zur Fixierung der beiden Schwenklagen des unteren Strohleitblechs (8) eine an das Gehäuse oder die Haube angelenkte Gasfeder (32) vorgesehen ist, deren anderes Ende an einen auf dessen Schwenkwelle (7) befestigten Hebel (26) in der Weise angelenkt ist, daß diese bei der Verschwenkung zwischen den beiden Schwenklagen ihre Totpunktstellung durchwandert.

4. Mähdrescher nach einem der vorhergehenden Ansprüche, dadurch gekennzeichnet, daß zur Sicherung der ausgeschwenkten Stellung des oberen Strohleitblechs (20) mit diesem und dem Gehäuse oder dem Heckblech (16) eine Gasfeder (35) gelenkig verbunden ist.

5. Mähdrescher nach einem der vorhergehenden Ansprüche, dadurch gekennzeichnet, daß zur gemeinsamen Verschwenkung der Strohleitbleche (8, 20) ein Betätigungshebel (27) mit einer von deren Schwenkwellen (7) verbunden ist.

6. Mähdrescher nach einem der vorhergehenden Ansprüche, dadurch gekennzeichnet, daß eine der einander zugewandten frei schwenkbaren Seiten der Strohleitbleche (8, 20) unter Bildung einer Stufe mit einem einen das Strohleitblech (20, 101, 101a) verlängernden Steg (22, 101a) aufweisenden Rand (21, 101f) versehen ist, der einen Anschlag für den Rand (15) des anderen Strohleitblechs (8) bildet.

7. Mähdrescher nach einem der vorhergehenden Ansprüche, dadurch gekennzeichnet, daß die jeweiligen Endstellungen der Strohleitbleche sichernde Anschläge an den Seitenwänden und/oder dem Heckblech (16) der hinteren Abdeckhaube (1) vorgesehen sind, und daß die Anschläge zur Verriegelung der Strohleitbleche mit durch Elektromagnete (14) ausfahrbaren und einziehbaren Verriegelungsbolzen (13) versehen sind, die in entsprechende Ausnehmungen der Strohleitbleche greifen.

8. Mähdrescher nach einem der vorhergehenden Ansprüche, dadurch gekennzeichnet, daß das untere Strohleitblech (8) in eine Schwingbewegung versetzbar ist.

9. Mähdrescher nach Anspruch 8, dadurch gekennzeichnet, daß die Schwingbewegung durch an dem unteren Strohleitblech anliegende, rotierende Exzenter (102e) erzeugt wird.

10. Mähdrescher nach Anspruch 8 oder 9, dadurch gekennzeichnet, daß die Schwenkwelle (107) exzentrisch gelagert und antreibbar ist.

11. Mähdrescher nach einem der Ansprüche 8 bis 10, dadurch gekennzeichnet, daß die Schwenkwelle (107) mit einem Kurbeltrieb verbunden ist.

12. Mähdrescher nach einem der vorhergehenden Ansprüche, dadurch gekennzeichnet, daß die Schwenkwelle (106) mit einer Unwucht (115) versehen ist.

13. Mähdrescher nach einem der vorhergehenden Ansprüche, dadurch gekennzeichnet, daß das untere Strohleitblech (8) einen Vibrator aufweist.

14. Mähdrescher nach einem der vorhergehenden Ansprüche, dadurch gekennzeichnet, daß das untere Strohleitblech (102, 102a) aus zwei gelenkig miteinander verbundenen Teilen (102b, 102c) besteht.

15. Mähdrescher nach einem der vorhergehenden Ansprüche, dadurch gekennzeichnet, daß das untere Strohleitblech (102) als geschlossener Hohlkörper (124) ausgebildet ist und Luftaustrittsschlitze (124a, 124b) aufweist.

16. Mähdrescher nach einem der vorhergehenden Ansprüche, dadurch gekennzeichnet, daß das untere Strohleitblech (102) ein umlaufendes Band (125) aufweist.

17. Mähdrescher nach einem der vorhergehenden Ansprüche, dadurch gekennzeichnet, daß das untere Strohleitblech (8) in eine Schwingbewegung versetzbar ist, daß die Schwingbewegung durch an dem (unteren) Strohleitblech (8) anliegende, rotierende Exzenter (102e) erzeugt wird und daß die rotierenden Exzenter durch einen Riementrieb gemeinsam angetrieben werden.

18. Mähdrescher nach einem der vorhergehenden Ansprüche, dadurch gekennzeichnet, daß das untere Strohleitblech (8) in eine Schwingbewegung versetzbar ist und daß die Schwingbewegung durch ein rotierendes Vieleck (Quadratrohr, Sechskantrohr) (135) erzeugt wird.

19. Mähdrescher nach einem der vorhergehenden Ansprüche, dadurch gekennzeichnet, daß auf mindestens einer Welle eine Riemenscheibe (127a) exzentrisch angeordnet ist

**Revendications**

1. Moissonneuse-batteuse comportant un hache-paille (2, 101c), une tôle inférieure (8, 102, 102a) de guidage de paille, disposée de manière inclinée au-dessous des secoueurs (9, 103a) éjectant la paille et montée de manière à pouvoir pivoter autour d'un premier arbre (7, 106), ou d'un axe fixe, logé dans des tôles latérales (6) de la moissonneuse-batteuse, et une tôle supérieure (20, 101, 101a) de guidage de paille, ces tôles pouvant guider la paille dans l'orifice d'introduction (5) de la moissonneuse-batteuse (2), dans laquelle les secoueurs (9, 103a) sont entourés par un capot (1, 101b) formé de tôles latérales (6) et d'une tôle arrière (16), caractérisée en ce que la tôle inférieure (8, 102, 102a) de guidage de paille est montée au-dessus du bord intérieur (4) de l'orifice d'introduction (5) du hache-paille (2) et est susceptible d'être bloquée, au moyen d'un premier dispositif d'arrêt, dans sa position située au-dessous des secoueurs (9, 103a) ou dans sa position pivotée vers l'arrière, dans laquelle elle recouvre de manière inclinée l'orifice d'introduction (5), la tôle supérieure (20, 101, 101a) de guidage de paille est montée de manière à pouvoir pivoter autour d'un second arbre (19, 101e), ou d'un axe fixe, logé au-dessus du hache-paille (2) dans la zone d'extrémité arrière du capot (1, 101b), et ladite tôle supérieure de guidage de paille est maintenue, au moyen d'un second dispositif d'arrêt, dans sa position rabattue contre la tôle arrière (16) du capot (1, 101b) ou dans sa position alignée avec la tôle inférieure (8, 102, 102a) de guidage de paille pivotée au-dessus de l'orifice d'introduction (5).

2. Moissonneuse-batteuse selon la revendication 1, caractérisée en ce que les arbres de pivotement (7, 106, 19, 101e) des tôles inférieure et supérieure (8, 102, 102a, 20, 101, 101a) de guidage de paille portent chacun un levier (26, 29) disposé de manière fixe, dont les extrémités libres sont articulées sur une barre de couplage (28) de manière telle que les mouvements pivotants des tôles (8, 102, 102a, 20, 101, 101a) de guidage de paille, allant de leur position située au-dessous du secoueur (9, 103a) ou rabattue contre la tôle arrière (16) à leur position d'alignement mutuel, et inversement, sont couplés.

3. Moissonneuse-batteuse selon la revendication 1 ou 2, caractérisée en ce qu'il est prévu, pour bloquer les deux positions pivotées de la tôle inférieure (8), un ressort pneumatique (32) qui est articulé sur l'enceinte ou sur le capot et dont l'autre extrémité est articulée sur un levier (26), fixé sur son arbre de pivotement (7), d'une manière telle que celui-ci passe par sa position de pointmort lors du pivotement entre les deux positions pivotées.

4. Moissonneuse-batteuse selon l'une quelconque des revendications précédentes, caractérisée en ce qu'un ressort pneumatique (35) est relié de manière articulée à la tôle supérieure (20) de guidage de paille et à l'enceinte ou à la tôle arrière (16) pour assurer la position pivotée de ladite tôle supérieure (20) de guidage de paille.

5. Moissonneuse-batteuse selon l'une quelconque des revendications précédentes, caractérisée en ce qu'un levier d'actionnement (27) est relié à un des arbres de pivotement (7) pour assurer le pivotement commun des tôles (8, 20) de guidage de paille.

6. Moissonneuse-batteuse selon l'une quelconque des revendications précédentes, caractérisée en ce qu'un des côtés des tôles de guidage de paille (8, 20), tournés l'un vers l'autre et pouvant pivoter librement, est pourvu d'un bord (21, 101g) comportant un montant (22, 101f) prolongeant la tôle (20, 101, 101a) de guidage de paille, ledit bord (21, 101g) formant une butée pour le bord (15) de l'autre tôle (8) de guidage de paille.

7. Moissonneuse-batteuse selon l'une quelconque des revendications précédentes, caractérisée en ce qu'il est prévu sur les parois latérales et/ou sur la tôle arrière (16) du capot arrière (1) des butées qui assurent les positions extrêmes respectives des tôles de guidage de paille, et en ce que, pour verrouiller les tôles de guidage de paille, les butées sont pourvues de boulons de verrouillage (13) pouvant être sortis et rentrés au moyen d'électroaimants (14) et qui s'engagent dans des évidements correspondants des tôles de guidage de paille.

8. Moissonneuse-batteuse selon l'une quelconque des revendications précédentes, caractérisée en ce que la tôle (inférieure) (8) de guidage de paille peut être déplacée selon un mouvement oscillatoire.

9. Moissonneuse-batteuse selon la revendication 8, caractérisée en ce que le mouvement oscillatoire est produit par des excentriques (102e) rotatifs disposés contre la tôle (inférieure) (8) de guidage de paille.

10. Moissonneuse-batteuse selon la revendication 8 ou 9, caractérisée en ce que l'arbre de pivotement (107) est monté excentriquement et peut être actionné par commande.

11. Moissonneuse-batteuse selon l'une quelconque des revendications 8 à 10, caractérisée en ce que l'arbre de pivotement (107) est relié à une commande à manivelle.

12. Moissonneuse-batteuse selon l'une quelconque des revendications précédentes, caractérisée en ce que l'arbre de pivotement (106) est pourvu d'un balourd (115).

13. Moissonneuse-batteuse selon l'une quelconque des revendications précédentes, caractérisée en ce que la tôle (inférieure) (8) de guidage de paille comporte un vibrateur.

14. Moissonneuse-batteuse selon l'une quelconque des revendications précédentes, caractérisée en ce que la tôle (inférieure) (102, 102a) de guidage de paille se compose de deux éléments (102b, 102c) reliés entre eux de manière articulée.

15. Moissonneuse-batteuse selon l'une quelconque des revendications précédentes, caractérisée en ce que la tôle (inférieure) (102) de guidage de paille est conformée en corps creux (124) fermé et comporte des fentes (124a, 124b) d'évacuation d'air.

16. Moissonneuse-batteuse selon l'une quelconque des revendications précédentes, caractérisée en ce que la tôle (inférieure) (102) de guidage de paille comporte une bande circulante (125).

17. Moissonneuse-batteuse selon l'une quelconque des revendications précédentes, caractérisée en ce que la tôle (inférieure) (8) de guidage de paille peut être déplacée selon un mouvement oscillatoire, en ce que le mouvement oscillatoire est produit par des excentriques (102e) rotatifs disposés contre la tôle (inférieure) (8) de guidage de paille et en ce que les excentriques rotatifs sont actionnés ensemble par une commande à courroie.

18. Moissonneuse-batteuse selon l'une quelconque des revendications précédentes, caractérisée en ce que la tôle (inférieure) (8) de guidage de paille peut être déplacée selon un mouvement oscillatoire et en ce que le mouvement oscillatoire est produit par un polygone rotatif (tube carré, tube hexagonal) (135).

19. Moissonneuse-batteuse selon l'une quelconque des revendications précédentes, caractérisée en ce qu'une poulie (127a) est disposée excentriquement sur au moins un arbre.

**Claims**

1. A combine harvester with a straw chopper attachment (2) and a lower straw guide plate (8, 102, 102a) pivotably mounted round a first shaft (7, 106), which is mounted or fixed in side plates (6) of the combine harvester, which straw guide plate is slantingly arranged beneath the straw-discharging shakers (9, 103a) and an upper straw guide plate (20, 101, 101a), which are capable of guiding the straw into the intake opening (5) of the straw chopper attachment (2), wherein the shakers (9, 103a) are surrounded by a covering hood (1, 101b) composed of side plates (6) and a back rear plate (16),

characterized in that

the lower straw guide plate (8, 102, 102a) is mounted above the inner edge (4) of the intake opening (5) of the straw chopper attachment (2), and in that it can be fixed by means of a first locking device in its position situated beneath the shakers (9, 103a) or its backwardly tilted position, slantingly covering the intake opening (5) and

in that the upper straw guide plate (20, 101, 101a) is pivotably mounted round a second shaft (19, 101e) mounted or fixed in the rear end zone of the covering hood (1, 101b), which upper straw guide plate is held in its position tilted against the rear plate (16) of the covering hood (1, 101b) or in its position aligned with the lower straw guide plate (8, 102, 102a) tilted over the intake opening (5), by means of a second locking device.

2. A combine harvester according to Claim 1, characterized in that the pivoting shafts (7, 106, 19, 101e) of the lower and upper straw guide plates (8, 102, 102a, 20, 101, 101a) respectively carry a fixedly mounted lever (26, 29) whose free ends are articulated to a coupling rod (28) in such a way that the tilting movements of the straw guide plates (8, 102, 102a, 20, 101, 101a) are coupled from the position situated beneath the shaker (9, 103a) or the position tilted against the rear plate (16) into their interaligned position and vice versa.

3. A combine harvester according to Claim 1 or 2, characterized in that, for the fixing of the two tilted positions of the lower straw guide plate (8), provision is made for a pneumatic spring (32) articulated on the casing or the hood, whose other end is articulated on a lever (26) fixed on its pivoting shaft (7) in such a way that the latter passes through its dead centre position during the pivoting action between the two tilted positions.

4. A combine harvester according to one of the preceding Claims, characterized in that, in order to secure the swung out position of the upper straw guide plate (20), a pneumatic spring (35) is articulated to the latter and to the casing or the rear plate (16).

5. A combine harvester according to one of the preceding Claims, characterized in that for the combined tilting of the straw guide plates (8, 20), an actuating lever (27) is connected to one of their pivoting shafts (7).

6. A combine harvester according to one of the preceding Claims, characterized in that one of the freely tiltable sides facing each other of the straw guide plate (8, 20) while forming a step, is provided with an edge (21, 101f) having a web (22, 101g) extending the straw guide plate (20, 101a), which edge forms a stop for the edge (15) of the other straw guide plate (8).

7. A combine harvester according to one of the preceding Claims, characterized in that the stops securing the respective end positions of the straw guide plates are provided on the side walls and/or the rear plates (16) of the rear cover hood (1), and in that the stops for the bolting of the straw guide plates are provided with locking bolts (13) that can be moved out and retracted by means of electromagnets (14), which bolts engage in corresponding recesses of the straw guide plate.

8

8. A combine harvester according to one of the preceding Claims, characterized in that the (lower) straw guide plate can be placed into an oscillatory motion.

9. A combine harvester according to Claim 8, characterized in that the oscillatory motion of the (lower) straw guide plate (8) is produced by rotating eccentrics (102e) bearing on the (lower) straw guide plate (8).

10. A combine harvester according to Claim 8 or 9, characterized in that the pivoting shaft (7) is eccentrically mounted and is drivable.

11. A combine harvester according to one of Claims 8 to 10 characterized in that the pivoting shaft (107) is connected to a crank drive mechanism.

12. A combine harvester according to one of the preceding Claims, characterized in that the pivoting shaft (106) is provided with an unbalanced member (115).

13. A combine harvester according to one of the preceding Claims, characterized in that the (lower) straw guide plate (8) has a vibrator.

14. A combine harvester according to one of the preceding Claims, characterized in that the (lower) straw guide plate (102, 102a) consists of two interarticulated parts (102b, 102c).

15. A combine harvester according to one of the preceding Claims, characterized in that the (lower) straw guide plate (102) is designed as a closed hollow body (124), and in that it has air exit slits (124a, 124b).

16. A combine harvester according to one of the preceding Claims, characterized in that the (lower) straw guide plate (102) has a circulating belt (125).

17. A combine harvester according to one of the preceding Claims, characterized in that the (lower) straw guide plate (8) can be placed into an oscillatory motion, in that the oscillatory motion is produced by rotating eccentrics (102e) bearing on the (lower) straw guide plate (8), and in that the rotating eccentrics are jointly driven by a belt drive.

18. A combine harvester according to one of the preceding Claims, characterized in that the (lower) straw guide plate.

(8) can be placed into an oscillatory motion, and in that the oscillatory motion is produced by a rotating polygon (a square tube, a hexagonal tube) (135).

19. A combine harvester according to one of the preceding Claims, characterized in that a belt pulley (127a) is arranged on at least one shaft.

## Fig. 1

Fig. 2

Fig. 3

# Fig. 4

Fig. 5

Fig. 6

Fig. 7

Fig. 8

Fig. 9

Fig. 10

Fig. 11

Fig. 12

102a

102

124a

124

124c

124b

124d

Fig. 14

102c

102b

102d

102

102e

102a

Fig. 13

Fig. 15

Fig. 16

9